# EUROPEAN PATENT APPLICATION

(11) **EP 4 814 027 A1**
(43) Date of publication of application: **30.09.2026**
(21) Application number: 26162517.2
(22) Date of filing: 05.03.2026
(51) Int. Cl.: C08F 222/10

(54) **POROUS-FILM FORMING LIQUID COMPOSITION AND METHOD FOR FORMING POROUS FILM**

(30) Priority: 19.03.2025 JP 2025044246
(71) Applicant: Ricoh Company, Ltd., Tokyo 143-8555 (JP)
(72) Inventor: ARITA, Manabu, Tokyo, 143-8555 (JP); SUENAGA, Takenori, Tokyo, 143-8555 (JP)
(74) Representative: Marks & Clerk LLP

(57) **Abstract**

A porous-film forming liquid composition includes polymerizable compounds and a solvent. The porous-film forming liquid composition is curable with active energy rays. The polymerizable compounds include a first polyfunctional monomer, in which a minimum number of atoms between a double bond in one functional group and a double bond in another functional group is 10 or greater and less than 15, and a second polyfunctional monomer, in which a minimum number of atoms between a double bond in one functional group and a double bond in another functional group is 15 or greater and 25 or less. An amount of the second polyfunctional monomer relative to a total amount of the polymerizable compounds is 10 percent by mass or greater.

## Description

### BACKGROUND OF THE INVENTION

### 1. Field of the Invention

The present disclosure relates to porous-film forming liquid compositions and methods for forming porous films.

### 2. Description of the Related Art

Active energy ray-curable liquid compositions are cured within a short period by active energy ray irradiation to form cured products, and therefore the active energy ray-curable liquid compositions are used for various applications. Among such liquid compositions, an active energy ray-curable liquid composition using polymerization-induced phase separation causes phase separation from a solvent due to a polymerization reaction of monomers, and the solvent is then removed by drying or the like, thereby forming pores in the film to form a porous film. In addition, shapes of pores or framework of the porous film, sizes of the pores or framework, and surface properties of the framework are appropriately selected. For example, a separation layer that allows only a predetermined substance to pass through or to be blocked can be provided. As another example, by utilizing a large surface area or void volume of a porous resin, an effective reaction field or reservoir field for a gas or liquid taken in from the outside can be provided. Therefore, if a liquid composition for forming a porous film, which can be easily handled and easily applied to various areas, can be provided, the range of applications of porous films or porous resins can be greatly expanded.

As such a liquid composition for forming a porous film, for example, Japanese Patent No. 4426157 discloses a porous-film-forming photocurable resin composition that includes, as essential constituent components, a photopolymerizable monomer (A), an organic compound (B) that is incompatible with the photopolymerizable monomer (A), a common solvent (C) that is compatible with both the photopolymerizable monomer (A) and the organic compound (B), and a photopolymerization initiator (D).

A porous film obtained by polymerization-induced phase separation has significantly different physical properties from a bulk-cured product that is obtained from the same monomer composition. For example, when a polyfunctional monomer that imparts a high crosslink density is used, a solid cured product is obtained as a bulk-cured product, but a porous film obtained by polymerization-induced phase separation may often end up with a brittle cured product. Therefore, a formulation of a liquid composition for forming a porous film needs to be designed uniquely from a formulation for a bulk. Physical properties of a bulk-cured product are dominantly derived from physical properties of substances constituting the bulk-cured product. For formation of a porous film, it is important to achieve a sufficient structural strength derived from the structure of the porous film to exhibit a strength as the porous film, and the control of the porous structure is the main objective to be achieved by the liquid composition. Therefore, the liquid composition is designed differently.

As one of applications of the porous films, a porous film is formed on a current collector foil and an electrode mixture layer on the current collector foil, which are served as an electrode, and the porous film can be used as a separator of battery materials. Since an energy density of a battery can be increased by reducing a thickness of a separator film, separator films are getting thinner. However, an excessively thin separator film causes problems that it is difficult to secure a sufficient insulation function, a strength of the film decreases, and the like. When a separator film is considered independently, there is also a problem that a thin separator film is difficult to handle. In the case where a porous film is formed on an active material of an electrode, the porous film is integrated with the electrode and therefore is easily handled. However, it is difficult to uniformly apply a thin film to form a porous film. If an amount of the liquid composition per unit area is reduced to reduce a thickness of a resultant film, a liquid film is likely to be discontinuous even when the liquid composition is applied by die coating, and it is also difficult to obtain a continuous film by inkjet printing or the like, as droplets are connected to one another. Therefore, it is significantly difficult to secure an insulation function with a uniform porous film.

### SUMMARY OF THE INVENTION

One aspect of the present disclosure aims to provide a porous-film forming liquid, which can form a porous film having a thickness smaller than a thickness of a layer of the porous-film forming liquid, and can form a porous film having a high porosity and a high strength.

According one aspect of the present disclosure, a porous-film forming liquid composition includes polymerizable compounds and a solvent, and is curable with active energy rays. The polymerizable compounds include a first polyfunctional monomer, in which a minimum number of atoms between a double bond in one functional group and a double bond in another functional group is 10 or greater and less than 15, and a second polyfunctional monomer, in which a minimum number of atoms between a double bond in one functional group and a double bond in another functional group is 15 or greater and 25 or less. An amount of the second polyfunctional monomer relative to a total amount of the polymerizable compounds is 10 percent by mass or greater.

According to one aspect of the present disclosure, there can be provided a porous-film forming liquid, which can form a porous film having a thickness smaller than a thickness of a layer of the porous-film forming liquid, and can form a porous film having a high porosity and a high strength.

### BRIEF DESCRIPTION OF THE DRAWINGS

Fig. 1 is a schematic view illustrating an example of an apparatus for forming a porous film in association with the present disclosure;
Fig. 2 is a SEM observation image of a porous film obtained from a porous-film forming liquid composition that does not include methacrylate; and
Fig. 3 is a SEM observation image of a porous film obtained from a porous-film forming liquid composition that includes methacrylate.

### DESCRIPTION OF THE EMBODIMENTS

As one of solutions for obtaining a thin and uniform porous film, use of a solvent-rich liquid composition is considered. With the solvent-rich liquid composition, a dry film thickness after active energy ray irradiation and solvent removal is reduced without reducing a coating amount of the liquid composition. However, compared with a typical liquid composition for polymerization-induced phase separation, an amount of the solvent is significantly large, and therefore there is a challenge in obtaining a thin and uniform porous film with a high porosity and a high strength using the solvent-rich liquid composition.

### (Porous-film forming liquid composition)

The porous-film forming liquid composition (which may be simply referred to as a "liquid composition" hereinafter) of the present disclosure includes polymerizable compounds and a solvent, and may further include a surfactant, a polymerization initiator, and other components, as necessary.

As the liquid composition of the present disclosure is irradiated with active energy rays, a polymerization reaction progresses to form a phase-separated film including a polymerized product and the solvent, and then the solvent in the phase-separated film is removed by drying or the like, thereby forming a porous film.

### <Polymerizable compound>

The polymerizable compounds included in the liquid composition of the present disclosure include a first polyfunctional monomer and a second polyfunctional monomer, and other monomers, as necessary. The first polyfunctional monomer is a polyfunctional monomer, in which a minimum number of atoms between a double bond in a functional group and a double bond in another functional group (which may be simply referred to as a "minimum number of atoms between double bonds" hereinafter) is 10 or greater and less than 15. The second polyfunctional monomer is a polyfunctional monomer, in which a minimum number of atoms between a double bond in a functional group and a double bond in another functional group is 15 or greater and 25 or less. The minimum number of atoms between the double bonds defines a number of atoms (excluding the double bonds themselves) in the shortest molecular chain connecting between carbon-carbon double bonds (C=C bonds) of the polymerizable functional groups in the molecule of the polyfunctional monomer. In the case where there are two or more combinations of the double bonds, the combination of the double bonds with the smallest number of atoms is selected. In the case of a monomer having a distribution in a molecular chain, the minimum number of atoms is calculated assuming that atoms are evenly distributed. For example, in the case of ethoxylated (9) triacrylate, it is calculated as ethoxylated (9) triacrylate being composed of three ethoxylated (3) acrylates. In the case of ethoxylated (5) tetraacrylate, it is calculated as ethoxylated (5) tetraacrylate being composed of four ethoxylated (1.25) acrylates.

The minimum number of atoms between the double bonds is important from the viewpoint of solubility of a resultant polymer and a porous structure in association with the solubility of the polymer. For example, the small number of atoms between the double bonds in the polymerizable monomer means generation of a site having a high crosslink density, which is likely to be insoluble, when the polymerizable monomer is polymerized. The high crosslink density site affects a strength of a resultant material, but also affects a porous structure or structural strength.

Since the liquid composition of the present disclosure includes the first polyfunctional monomer in which the minimum number of atoms between the double bonds is 10 or greater and less than 15, the liquid composition can form a porous film having a high porosity. In addition, since the liquid composition includes the second polyfunctional monomer in which the minimum number of atoms between the double bonds is 15 or greater and 25 or less, the liquid composition can form a porous film having a high film strength. Further, since an amount of the second polyfunctional monomer is 10 percent by mass or greater relative to a total amount of the polymerizable compounds, the liquid composition can form a porous film having both a high porosity and a high film strength. When the amount of the second polyfunctional monomer is less than 10 percent by mass, a film strength of a resultant porous film decreases. For attaining a desired porosity, the amount of the second polyfunctional monomer is preferably 50 percent by mass or less, but may be greater than 50 percent by mass depending on a type and amount of a monomer with a small number of atoms between double bonds for use, such as the first polyfunctional monomer. The amount of the second polyfunctional monomer is more preferably 20 percent by mass or greater and 30 percent by mass or less.

When a polyfunctional monomer, in which the minimum number of atoms between double bonds is less than 10, is included as one of other monomers, a film strength of a porous film is likely to decrease, and the film strength is unlikely to increase even with the addition of the second polyfunctional monomer. However, the polyfunctional monomer, in which the minimum number of atoms between double bonds is less than 10, may be added for the purpose of adjusting a porosity. The monomers, in which the minimum number of atoms between double bonds is less than 15, including the first polyfunctional monomer, in which the minimum number of atoms between double bonds is 10 or greater and less than 15, and the polyfunctional monomer, in which the minimum number of atoms between double bonds is less than 10, are preferably included in an amount of 50 percent by mass or greater relative to a total amount of the polymerizable compounds for attaining a high porosity. More preferably, as the monomer with less than 15 atoms between the double bonds, only the first polyfunctional monomer is preferably included in an amount of 50 percent by mass or greater for attaining both a porosity and a strength.

### <<First polyfunctional monomer>>

Specific examples of the first polyfunctional monomer in which the minimum number of atoms between double bonds is 10 or greater and less than 15 are presented below. Examples of the polyfunctional monomer in which the minimum number of atoms between double bonds is 10 include 1,6-hexanediol di(meth)acrylate and the like. Examples of the polyfunctional monomer in which the minimum number of atoms between double bonds is 11 include tricyclodecane dimethanol di(meth)acrylate, neopentyl glycol hydroxypivalate di(meth)acrylate, tris-(2-acryloxyethyl)isocyanurate, and the like. Examples of the polyfunctional monomer in which the minimum number of atoms between double bonds is 12 include triethylene glycol di(meth)acrylate, tripropylene glycol di(meth)acrylate, ethoxylated (3) glycerin tri(meth)acrylate, propoxylated (3) glycerin tri(meth)acrylate, ethoxylated (4) diglycerin tetra (meth)acrylate, and the like. Examples of the polyfunctional monomer in which the minimum number of atoms between double bonds is 13 include 1,9-nonanediol di(meth)acrylate, propoxylated (2) neopentyl glycol di(meth)acrylate, ethoxylated (4) pentaerythritol tetra(meth)acrylate, ethoxylated (3) trimethylolpropane tri(meth)acrylate, propoxylated (3) trimethylolpropane tri(meth)acrylate, bisphenol A diacrylate, and the like. Examples of the polyfunctional monomer in which the minimum number of atoms between double bonds is 14 include 1,10-decanediol di(meth)acrylate and the like. Examples of the polyfunctional monomer in which the minimum number of atoms between double bonds is 14.5 include ethoxylated (5) pentaerythritol tetra(meth)acrylate, and the like. As described above, in the case of a monomer in which there is a distribution in a molecular chain, the number of atoms between double bonds is calculated assuming that atoms are evenly distributed. In the case of ethoxylated (5) pentaerythritol tetra(meth)acrylate, the number of atoms between double bonds is calculated assuming that four acrylates are evenly ethoxylated (1.25). The above polyfunctional monomers may be used alone or in combination of two or more.

An amount of the first polyfunctional monomer in which the minimum number of atoms between double bonds is 10 or greater and less than 15 can be appropriately adjusted according to a desired porosity and strength. For attaining a high porosity of a resultant porous film, the amount of the first polyfunctional monomer in the liquid composition is preferably 50 percent by mass or greater.

In addition to the predetermined minimum number of atoms between double bonds, the first polyfunctional monomer preferably has a molecular weight of 700 or less. When the molecular weight of the first polyfunctional monomer is 700 or less, a change in solubility (change from a low molecular weight substance to a high molecular weight substance), namely, a change from a dissolved state in the liquid composition to a polymerized state, in which the polymer becomes insoluble and forms a porous structure, is large, so that a porous structure of a high porosity is easily obtained.

### <<Second polyfunctional monomer>>

Specific examples of the second polyfunctional monomer, in which the minimum number of atoms between double bonds is 15 or greater and 25 or less, will be presented below. Examples of the polyfunctional monomer in which the minimum number of atoms between double bonds is 15 include tetraethylene glycol di(meth)acrylate, polyethylene glycol (200) di(meth)acrylate and the like. Examples of the polyfunctional monomer in which the minimum number of atoms between double bonds is 19 include ethoxylated (6) trimethylolpropane tri(meth)acrylate, propoxylated (6) trimethylolpropane tri(meth)acrylate, ethoxylated (12) dipentaerythritol hexa(meth)acrylate, and the like. Examples of the polyfunctional monomer in which the minimum number of atoms between double bonds is 21 include polyethylene glycol (300) di(meth)acrylate and the like. Examples of the polyfunctional monomer in which the minimum number of atoms between double bonds is 22 include ethoxylated (3) bisphenol A diacrylate and the like. Examples of the polyfunctional monomer in which the minimum number of atoms between double bonds is 24 include polypropylene glycol (400) di(meth)acrylate, ethoxylated (9) glycerin tri(meth)acrylate, and the like. Examples of the polyfunctional monomer in which the minimum number of atoms between double bonds is 25 include ethoxylated (9) trimethylolpropane tri(meth)acrylate, propoxylated (9) trimethylolpropane tri(meth)acrylate, ethoxylated (4) bisphenol A diacrylate, and the like. The above polyfunctional monomers may be used alone or in combination of two or more.

An amount of the second polyfunctional monomer relative to a total amount of the polymerizable compound is 10 percent by mass or greater, and is preferably 15 percent by mass or greater for improving a strength of a resultant porous film. When the amount of the second polyfunctional monomer is too large, a porosity of a resultant porous film may decrease. Therefore, the amount of the second polyfunctional monomer is preferably 50 percent by mass or less, and is particularly preferably 20 percent by mass or greater and 30 percent by mass or less.

The second polyfunctional monomer preferably includes methacrylate. An amount of the methacrylate is preferably 5 percent by mass or greater and 20 percent by mass or less relative to a total amount of the polymerizable compounds. When the second polyfunctional monomer includes the methacrylate, pore diameters of a framework constituting a porous structure become large to improve a strength of a resultant porous film or improve liquid permeability of the porous structure (battery characteristics when the porous film is used as a separator), and therefore the methacrylate is preferably included. When the amount of the methacrylate is greater than 20 percent by mass, the framework of the porous structure tends to be formed into particles, and the framework is likely to be broken into particles. Therefore, particularly in the case where a solvent ratio in the liquid composition is increased and a dried film thickness is designed to be thin, a porous structure is easily collapsed and therefore caution is needed.

In addition to the predetermined minimum number of atoms between double bonds, the second polyfunctional monomer preferably has a molecular weight of 1,000 or less. When the molecular weight of the second polyfunctional monomer is 1,000 or less, a sufficient number of double bonds per molecular weight can be maintained, and therefore a crosslink reaction sufficiently progresses, thereby forming a desired porous structure.

### <<Other polyfunctional monomers>>

Examples of other polyfunctional monomers include: a polyfunctional monomer in which the minimum number of atoms between double bonds is 9 or less; a polyfunctional monomer in which the minimum number of atoms between double bonds is 26 or greater; and the like.

Specific examples of the polyfunctional monomer in which the minimum number of atoms between double bonds is 9 or less will be presented below. Examples of the polyfunctional monomer in which the minimum number of atoms between double bonds is 6 include ethylene glycol di(meth)acrylate, glycerin tri(meth)acrylate, and the like. Examples of the polyfunctional monomer in which the minimum number of atoms between double bonds is 7 include neopentyl glycol di(meth)acrylate, 1,3-butylene glycol di(meth)acrylate, pentaerythritol tri(meth)acrylate, pentaerythritol tetra(meth)acrylate, dipentaerythritol penta(meth)acrylate, dipentaerythritol hexa(meth)acrylate, trimethylolpropane tri(meth)acrylate, ditrimethylolpropane tetra(meth)acrylate, glycerin di(meth)acrylate, trimethylolethane tri(meth)acrylate, 2-hydroxy-3-methacrylpropylacrylate, and the like. Examples of the polyfunctional monomer in which the minimum number of atoms between double bonds is 8 include 1,4-butane glycol di(meth)acrylate, diallyl phthalate, triallyl trimellitate, and the like. Examples of the polyfunctional monomer in which the minimum number of atoms between double bonds is 9 include diethylene glycol di(meth)acrylate, dipropylene glycol di(meth)acrylate, and the like. The above polymerizable monomers may be added to the first polyfunctional monomer to be mixed. In particular, the above polymerizable monomers can be added when improvement in porosity is desired. When an excessive amount of the above polyfunctional monomers is added, a strength of a resultant porous film is likely to decrease, and a sufficient strength may not be obtained even with addition of the second polyfunctional monomer. Therefore, caution is needed.

Examples of the polyfunctional monomer in which the minimum number of atoms between double bonds is 26 or greater include polyethylene glycol di(meth)acrylate having a sufficiently long molecular chain, which has not been described above, polypropylene glycol di(meth)acrylate, ethoxylated bisphenol A diacrylate, polytetramethylene glycol di(meth)acrylate, ethoxylated pentaerythritol tetra(meth)acrylate, ethoxylated trimethylolpropane tri(meth)acrylate, propoxylated (3) trimethylolpropane tri(meth)acrylate, ethoxylated dipentaerythritol hexa(meth)acrylate, ethoxylated glycerin tri(meth)acrylate, urethane acrylate oligomers, epoxy acrylate oligomers, polyester acrylate oligomers, polyether acrylate oligomers, silicone acrylate oligomers, and the like. For example, the above polymerizable monomers may be added to the second polyfunctional monomer to be mixed. In particular, the above polymerizable monomers can be added when improvement in porosity is desired. Moreover, any of the above polymerizable monomers may be added as a surfactant for adjusting a surface tension of the liquid composition.

### <<Monofunctional monomer>>

The polymerizable compounds of the present disclosure may include a monofunctional monomer other than the polyfunctional monomers. The monofunctional monomer is a monomer with one functional group.

The monofunctional monomer is not particularly limited, and may be appropriately selected according to the intended purpose. Examples of the monofunctional monomer include hydroxyethyl(meth)acrylamide, (meth)acryloyl morpholine, dimethylaminopropylacrylamide, isobornyl (meth)acrylate, adamantyl (meth)acrylate, 2-methyl-2-adamantyl (meth)acrylate, dicyclopentenyl (meth)acrylate, dicyclopentanyl (meth)acrylate, dicyclopentenyloxyethyl (meth)acrylate, 3,3,5-trimethylcyclohexane(meth)acrylate, t-butyl(meth)acrylate, tetrahydrofurfuryl (meth)acrylate, cyclohexyl (meth)acrylate, benzyl (meth)acrylate, 2-hydroxyethyl(meth)acrylate, 2-hydroxypropyl(meth)acrylate, 2-hydroxybutylacrylate, isobutyl acrylate, t-butyl acrylate, phenoxyethyl acrylate, (2-methyl-2-ethyl-1,3-dioxolan-4-yl) methacrylate, cyclic trimethylolpropane formal acrylate, and the like. The above monofunctional monomers can be added by reinforcing the crosslinks of the polyfunctional monomers, imparting flexibility, or changing a porous structure. An amount of the monofunctional monomer relative to a total amount of the polymerizable compound is preferably 10 percent by mass or less so as not to interfere with formation of a porous structure.

### <Solvent>

As the solvent, a solvent having a boiling point of 50°C or higher and 250°C or lower at ambient pressure is preferable, and a solvent having a boiling point of 70°C or higher and 200°C or lower at ambient pressure is more preferable. Further, a solvent having a boiling point of 120°C or higher at ambient pressure is preferable. Since the solvent has the boiling point of 50°C or higher, vaporization of the solvent at around room temperature is minimized, and therefore the liquid composition can be easily handled. Since the solvent has the boiling point of 250°C or lower, duration for a process of drying the solvent after formation of a porous film is shortened, and therefore the productivity is improved.

Examples of the solvent include: alkanes, such as decane; alcohols, such as cyclohexanol, 1-hexanol, and 2-ethylhexanol; esters, such as hexyl propionate, pentyl butyrate, and ethyl hexanoate; ketones, such as diisobutyl ketone and cyclohexanone; ethers; amides; carboxylic acids; and the like. The solvent can be appropriately selected according to a combination with the polymerizable compounds. The solvent needs to cause phase separation from a polymer generated from the polymerization of the polymerizable compounds. Therefore, the solvent is preferably a solvent that does not have very high compatibility with the polymer, and is particularly preferably selected from alkanes having long hydrocarbon chains, alcohols, esters, ethers, and the like. In order to mix the polymerizable compounds and the solvent together to form the liquid composition and to cause phase separation after a polymerization reaction initiated by active energy rays, the compatibility between the polymerizable compounds and the solvent are preferably adjusted, and the compatibility is preferably adjusted using a plurality of solvents, or a plurality of the polymerizable compounds.

An amount of the solvent is not particularly limited, as long as a porous film can be formed using the liquid composition. In order to form a porous structure, the amount of the solvent is preferably 30 percent by mass or greater and 80 percent by mass or less. In order to form a porous film having a high strength, the amount of the solvent is generally preferably 40 percent by mass or greater and 60 percent by mass or less. In general, when the amount of the solvent is 60 percent by mass or greater and 80 percent by mass or less, a porous structure may be formed, but a strength of the porous structure may be low. When the liquid composition of the present disclosure is used, however, a high strength is obtained even if the solvent is included in the amount of 60 percent by mass or greater and 80 percent by mass or less in the liquid composition, and both the high strength and a high porosity can be achieved. Further, a thin dry film thickness relative to a thickness of a layer of the liquid composition in the liquid state can be obtained. Further, the dry film thickness can be 2/3 or less of the film thickness in the liquid state by adjusting types or amounts of the solvent and the polymerizable compounds for use.

### <Surfactant>

The porous-film forming liquid composition of the present disclosure may include a surfactant for adjusting a surface tension of the porous-film forming liquid composition. Moreover, the surfactant is preferably a surfactant that does not adversely affect battery characteristics when a resulting porous film is used as a separator, and is preferably a surfactant including a polymerizable functional group.

The surfactant is not particularly limited. For example, a silicone-based surfactant, an acetylene glycol-based surfactant, a fluorine-based surfactant, or the like can be used. A type of the surfactant for use is not limited, as long as the above-described relationship of the surface tension can be satisfied.

Specific examples of the silicone-based surfactant include: BYK-300, BYK-306, BYK-310, BYK-320, BYK-330, BYK-344, BYK-346, BYK-UV3500, and BYK-UV3570 (manufactured by BYK Chemie GmbH); TEGO Rad 2100, TEGO Rad 2200, TEGO Rad 2250, TEGO Rad 2300, TEGO Rad 2500, Tego Twin 4000, and Tego Twin 4100 (manufactured by Evonik Industries AG); KP-341, KP-358, KP-368, KF-96-50CS, KF-6020, and KF-50-100CS (manufactured by Shin-Etsu Chemical Co., Ltd.); and the like.

Specific examples of the acetylene glycol-based surfactant include: DYNOL 604, SURFYNOL 104H, SURFYNOL 104A, SURFYNOL 104BC, SURFYNOL 104DPM, SURFYNOL 104PA, SURFYNOL 104S, SURFYNOL 420, SURFYNOL 440, SURFYNOL SE, SURFYNOL SE-F, and SURFYNOL 61 (manufactured by Air Products and Chemicals, Inc.); and the like.

Specific examples of the fluorine-based surfactant include: MEGAFACE F-430, MEGAFACE F-444, MEGAFACE F-472SF, MEGAFACE F-475, MEGAFACE F-477, MEGAFACE F-552, MEGAFACE F-553, MEGAFACE F-554, MEGAFACE F-555, MEGAFACE F-556, MEGAFACE F-558, MEGAFACE R-94, MEGAFACE RS-75, MEGAFACE RS-76-NS, and MEGAFACE RS-72-K (manufactured by DIC Corporation); EFTOP EF-351, EFTOP EF-352, EFTOP EF-601, EFTOP EF-801, and EFTOP EF-802 (manufactured by Mitsubishi Materials Corporation); Ftergent 222F, Ftergent 251, and FTX-218 (manufactured by NEOS COMPANY LIMITED); Surflon SC-101 and Surflon KH-40 (manufactured by AGC Semi Chemical Co., Ltd.); and the like.

### <Polymerization initiator>

The porous-film forming liquid composition of the present disclosure may include a polymerization initiator. The polymerization initiator may be any polymerization initiator, as long as the polymerization initiator can generate active species, such as radicals and cations, by heat or energy of active energy rays, and can initiate polymerization of the polymerizable compounds (e.g., monomers or oligomers). As such a polymerization initiator, any radical polymerization initiators, cationic polymerization initiators, and base generators known in the related art may be used alone or in combination of two or more. Among the above polymerization initiators, a radical polymerization initiator is preferable.

The radical polymerization initiator is not particularly limited, and may be appropriately selected according to the intended purpose. Examples of the radical polymerization initiator include aromatic ketones, acylphosphine oxide compounds, aromatic onium salt compounds, organic peroxides, thio compounds (e.g., thioxanthone compounds and thiophenyl group-containing compounds), hexaarylbiimidazole compounds, ketoxime ester compounds, borate compounds, azinium compounds, metallocene compounds, active ester compounds, compounds including a carbon-halogen bond, alkylamine compounds, and the like. As a specific example of the radical polymerization initiator, α-hydroxyacetophenone, α-amino acetophenone, 4-aroyl-1,3-dioxolane, benzylketal, 2,2-diethoxyacetophenone, p-dimethylaminoacetophene, p-dimethylaminopropiophenone, benzophenone, 2-chlorobenzophenone, pp'-dichlorobenzophenone, pp'-bisdiethylaminobenzophenone, Michler's ketone, benzil, benzoin, benzyldimethylketal, tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexylphenylketone, 2-hydroxy-2-methyl-1-phenyl-1-one, 1-(4-isopropylphenyl)-2-hydroxy-2-methylpropan-1-one, methylbenzoyl formate, benzoinisopropyl ether, benzoin methyl ether, benzoin ethyl ether, benzoin ether, benzoin isobutyl ether, benzoin n-butyl ether, benzoin n-propyl, 1-hydroxy-cyclohexyl-phenyl-ketone, 2-benzyl-2-dimethylamino-1-(4-morpholinophenyl)-butanone-1, 1-hydroxy-cyclohexyl-phenyl-ketone, 2,2-dimethoxy-1,2-diphenylethan-1-one, bis(η-5-2,4-cyclopentadien-1-yl)-bis(2,6-difluoro-3-(1H-pyrrol-1-yl)-phenyl) titanium, bis(2,4,6-trimethylbenzoyl)-phenyl phosphine oxide, 2-methyl-1 [4-(methylthio)phenyl]-2-morpholinopropan-1-one, 2-hydroxy-2-methyl-1-phenyl-propan-1-one, bis(2,6-dimethoxybenzoyl)-2,4,4-trimethyl-pentyl phosphine oxide, 1-[4-(2-hydroxyethoxy)-phenyl]-2-hydroxy-2-methyl-1-propan-1-one monoacyl phosphine oxide, and the like.

When an amount of the polymerization initiator is too large, a resultant porous film has an excessively fine pore structure, and therefore permeability of the porous film may decrease. When the amount of the polymerization initiator is too small, a resultant porous film may have a low strength, and unreacted substances may remain due to a curing failure. In addition, the excessive amount of the polymerization initiator also causes residues. Therefore, the amount of the polymerization initiator relative to 100 parts by mass of a total amount of the polymerizable compounds is preferably 0.1 parts by mass or greater and 10 parts by mass or less, and more preferably 1 part by mass or greater and 5 parts by mass or less.

### <Other components>

The porous-film forming liquid composition of the present disclosure may further include other components, as necessary. The other components are not particularly limited, and may be appropriately selected according to the intended purpose. Examples of the other components include polymerization inhibitors, leveling agents, defoaming agents, polymerization accelerators (sensitizers), fluorescent whitening agents, pigments, inorganic particles, viscosity stabilizers, antifungal agents, preservatives, antioxidants, ultraviolet absorbers, thickeners, and the like.

### <Preparation of porous-film forming liquid composition>

The liquid composition can be prepared using the above-described components. A preparation method or conditions are not particularly limited. For example, the liquid composition can be prepared by mixing the polymerizable compounds, the solvent, the polymerization initiator, the surfactant, and the like, and stirring or vibrating the resultant mixture.

### <Viscosity>

A viscosity of the liquid composition is not particularly limited, and may be appropriately adjusted according to the intended use or an application device for use. For example, in the case where a discharging device configured to discharge the liquid composition from nozzles is used, the viscosity of the liquid composition at 25°C is preferably 7 mPa·s or greater and 40 mPa·s or less, and more preferably 9 mPa·s or greater and 20 mPa·s or less. The viscosity of the liquid composition at a temperature in the range of 20°C to 65°C is preferably 5 mPa·s or greater and 15 mPa·s or less, and more preferably 6 mPa·s or greater and 12 mPa·s or less.

When the liquid composition has the above range of viscosity, the liquid composition can be discharged by inkjet printing, while optionally controlling a temperature of an inkjet head.

The viscosity of the liquid composition can be measured by a cone plate-type rotary viscometer VISCOMETER TVE-25L manufactured by Toki Sangyo Co., Ltd., with a cone rotor (1° 34' × R24) at the rotational speed of 50 rpm with the temperature of the constant-temperature circulating water being appropriately set to the range of 20°C to 65°C. For the adjustment of the temperature of the circulating water, VISCOMATE VM-150IV can be used.

### <Applications>

The application of the liquid composition is not particularly limited as long as the liquid composition is used in the fields in which porous materials are generally used. The liquid composition is particularly preferable for use where a thin film or a high porosity is desired. As one example of specific applications, the liquid composition is suitably used for formation of a separator layer on an electrode mixture layer used for battery cells.

### (Method for forming porous film)

The porous-film forming liquid composition of the present disclosure may be applied, and the applied liquid composition is irradiated with active energy rays to form a porous film having a dry film thickness of 2/3 or less relative to a thickness of a layer of the liquid composition in the liquid state.

The method for forming the porous film of the present disclosure includes a coating step, an irradiation step, and a drying step, and may further include other steps, as necessary. In the case where the liquid composition is applied onto a porous film, such as an electrode mixture layer of an electrode, the method for forming the porous film may further include a base layer coating step that includes filling voids in the electrode mixture layer with a solvent in advance.

### <Coating step>

In the coating step, the porous-film forming liquid composition of the present disclosure is applied onto a substrate to form a layer of the porous-film forming liquid composition. A method for the application can be appropriately selected from various coating methods. In order to form a uniform film without any discontinuity, the liquid composition may be preferably applied to form a liquid film with a thickness of 10 µm or greater, more preferably 15 µm or greater, and particularly preferably 20 µm or greater. Generally speaking, when the thickness of the applied liquid composition is 20 µm, the liquid composition can be often uniformly applied without any discontinuity and defects by various coating methods.

The coating method is not particularly limited, and may be appropriately selected according to the intended purpose. Examples of the coating method include knife coating, nozzle coating, die coating, lip coating, comma coating, gravure coating, rotary screen coating, reverse roll coating, roll coating, spin coating, kneader coating, bar coating, blade coating, casting, dip coating, curtain coating, inkjet coating, and the like. Particularly in the case where a substrate having recesses and projections in a surface, such as an electrode substrate, is coated with the porous-film forming liquid composition, among the above coating methods, inkjet coating, which is a noncontact coating method and leaves a large gap between a head and the substrate, is preferable.

### <Irradiation step>

In the irradiation step, the layer of the porous-film forming liquid composition in the liquid state is irradiated with active energy rays to form a polymerized product of the polymerizable compounds. As a result of the polymerization, phase separation between the polymerized product and the solvent occurs, thereby forming a phase-separated film.

When a radiation dose of the active energy rays is too high, a porous film having a fine porous structure is formed, and therefore there are problems that electrolyte permeability of the porous film or the like decreases, pores are closed during drying, and the porous structure cannot be maintained. When the radiation dose of the active energy rays is too low, the polymerized product is likely to be formed into particles, and a framework of a resin film formed of the polymerized product collapses, and therefore a porous structure may not be obtained. Therefore, the radiation dose of the active energy rays is preferably adjusted as appropriate.

The active energy rays are not particularly limited, as long as the active energy rays can impart energy sufficient to advance a polymerization reaction of the polymerizable compounds, such as ultraviolet rays, electron beams, α-rays, β-rays, γ-rays, X-rays, and the like. In the case where a light source of particularly high energy is used, a polymerization reaction can progress without using a polymerization initiator. In the case of ultraviolet irradiation, a mercury-free light source is strongly desired from the viewpoint of environmental protection, and therefore use of a GaN-based semiconductor ultraviolet light emitting device as a replacement is very effective industrially and environmentally. Further, an ultraviolet light emitting diode (UV-LED) and an ultraviolet laser diode (UV-LD) are preferable as an ultraviolet light source because of a small size, a long service life, high efficiency, and low cost.

Types and wavelengths of the active energy rays are appropriately selected according to the presence or absence of a photopolymerization initiator or absorption wavelengths of the photopolymerization initiator. The types and wavelengths of the active energy rays are not particularly limited, and may be appropriately selected, as long as the active energy rays can initiate and advance the polymerization of the polymerizable compounds in the liquid composition.

The irradiation step is preferably performed in the presence of a polymerization inert gas. In the case of radical polymerization, use of the polymerization inert gas can reduce a concentration of polymerization-active oxygen in the air so that a polymerization reaction of the polymerizable compounds in the vicinity of a surface of the layer of the liquid composition can progress without being inhibited, and clogging of pores can be minimized. The polymerization inert gas to be used is not particularly limited, as long as the above function is satisfied, and examples of the polymerization inert gas include nitrogen, carbon dioxide, argon, and the like.

### <Drying step>

In the drying step, the polymerized product obtained at the irradiation step is dried, thereby forming a porous film. Depending on conditions of the drying step, a strength of the porous film may be increased.

When the drying is insufficiently performed, there may be problems due to the residual solvent, such as insufficient strength of a resultant porous layer, impaired battery characteristics due to residues, and the like. In addition, when the temperature is not high enough, a strength of a porous film may not be increased. The temperature and duration for the heating can be appropriately selected according to a boiling point of the solvent included in the liquid composition, a glass transition temperature of the polymerized product, an applied amount of the liquid composition, and the like. The temperature for the heating is preferably higher than the glass transition temperature of the polymerized product of the second polyfunctional monomer, and more preferably higher than the glass transition temperature of the porous film. Moreover, vacuum drying is preferably performed to completely remove the solvent.

The drying method is not particularly limited. Examples of the drying method include heating by a hot air heater or an IR heater, and depressurizing by a depressurization dryer or the like.

### <Apparatus for forming porous film>

The apparatus for forming the porous film for performing the method for forming the porous film of the present disclosure will be described with reference to a drawing. The apparatus for forming the porous film includes a coating device configured to perform the coating step, an irradiation device configured to perform the irradiation step, a drying device configured to perform the drying step, a container configured to accommodate the liquid composition, and a transporting device configured to transport a substrate or any of the above devices. The container may further accommodate a container. Further, as the coating device of the liquid composition, a discharging device may be included. Examples of the discharging device include a discharging device for inkjet printing. The inkjet printing is not particularly limited. Examples of the inkjet printing include continuous inkjet printing, drop-on-demand (DOD) inkjet printing, and the like. Examples of the DOD inkjet printing include piezoelectric DOD, thermal DOD, electrostatic DOD, and the like.

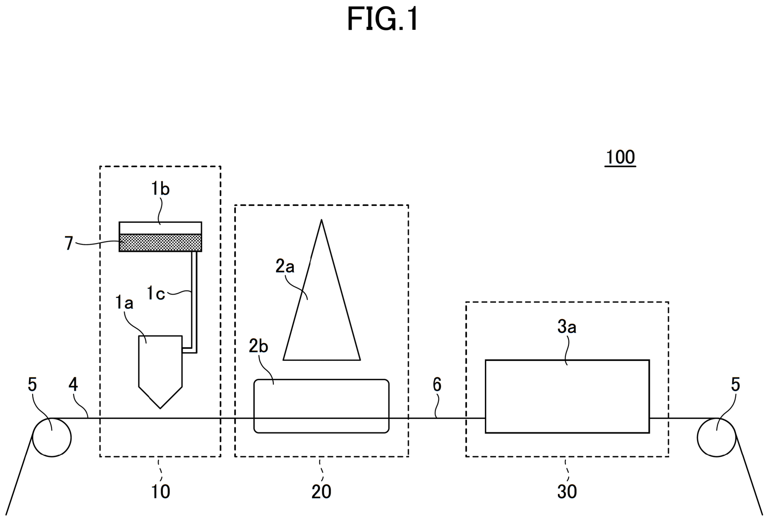

Fig. 1 is a schematic view illustrating an example of the apparatus for forming the porous film in association with the present disclosure. The apparatus for forming the porous film 100 includes a coating device 10, an irradiation device 20, a drying device 30, and the like. First, the liquid composition is supplied from the container 1b, in which the liquid composition 7 is accommodated, via the supply tube 1c, and is applied onto a substrate 4 by a coater 1a. Then, in the irradiation device 20, active energy rays are applied to the liquid composition by an active energy ray irradiator 2a inside a polymerization inert gas circulating device 2b, thereby forming a phase-separated film 6. Then, in the drying device 30, the solvent remaining in the phase-separated film 6 is dried by a dryer 3a, thereby forming a porous film on the substrate. Then, the substrate 4 on which the porous film has been formed is transported by a transporting device 5. The coater 1a may be provided with a temperature adjustment mechanism so that the liquid composition has an appropriate viscosity for the coating step. In addition, a direct contact or non-contact mechanism for adjusting the temperature of the substrate may be provided as necessary.

### <Porous film>

The porous film obtained by the method for forming the porous film of the present disclosure will be described. A structure of the porous film can be appropriately adjusted according to types of the polymerizable compounds, a combination or ratio of the polymerizable compounds and the solvent, the presence or absence of the methacrylate, or the like.

A shape of the framework of the porous structure can be controlled by the polymerizable compounds for use, a combination or ratio of the polymerizable compounds and the solvent, or the like, and can often be controlled particularly by adding methacrylate. The addition of methacrylate can increase pore diameters in the framework, and the large pore diameters of the framework can improve liquid permeability and a strength of a resultant porous film. Therefore, the methacrylate in an amount of 5 percent by mass or greater is preferably added. Conversely, when an excessive amount of the methacrylate is added, a porous structure, which is formed from the liquid composition having a high solvent ratio, may be likely to collapse (may not be able to form a film). Therefore, the methacrylate in an amount of 20 percent by mass or less is preferably added.

The pore diameters in the framework of the porous film are preferably 150 nm or greater, and more preferably 200 nm or greater. Even when the porosity is the same, the porous film having larger pores (larger voids) in the framework has higher liquid permeability, and therefore excellent battery characteristics are likely to be obtained when the porous film is used as a separator. In addition, the strength of the porous film is also likely to increase.

The porous structure of the porous film is not particularly limited. From the viewpoint of ensuring good liquid or gas permeability and strength as a film, the porous film preferably has a three-dimensional branched network structure of a cured product of a resin as a framework, and has a bicontinuous structure (also referred to as a monolithic structure) in which a plurality of pores are continuously connected in the porous film. Specifically, the porous film preferably includes a plurality of pores, in which one pore is connected to other pores nearby and extends three-dimensionally with continuity. Since the pores are connected to one another, a liquid or gas sufficiently penetrates the porous film, and functions, such as substance separation or a reaction field, can be effectively exhibited.

One of the physical properties imparted by the bicontinuous structure is air permeability. The air permeability of the porous film can be measured, for example, in accordance with JIS P8117, and is preferably 500 s/100 mL or less, and more preferably 300 s/100 mL or less. The air permeability can be measured, for example, by Gurley type Densometer (manufactured by Toyo Seiki Seisaku-sho, Ltd.) or the like.

A cross-sectional shape of each of the pores in the porous film may have a variety of shapes, such as a substantially circular shape, a substantially elliptical shape, and a substantially polygonal shape, and a variety of sizes. The size of the pores is not particularly limited, but is preferably 0.01 µm or greater and 1 µm or less, from the viewpoint of liquid or gas permeability and shielding properties as a film.

In order to use the porous film as a separator to achieve excellent battery characteristics, the porosity of the porous film is preferably 50% or greater.

A method for evaluating the strength of the porous film is not particularly limited. For example, the strength of the porous film can be evaluated by a scratch test with a scratch needle as described below. For the evaluation, Tribogear HHS2000S manufactured by Shinto Scientific Co., Ltd./HEIDON is used. As a scratch needle, a sapphire needle having a tip diameter of 0. 1 mm and a tip angle of 60 degrees is used. The scratch needle is moved at a speed of 1 mm/s for a moving length of 50 mm while a load is increased from 0 g to 50 g as a continuous load measurement. The load (moving length) at which the scraping starts is recorded, and the recorded value can be evaluated as a film strength.

A thickness of the porous film is not particularly limited. In view of uniformity in curing at the time of polymerization, the thickness of the porous film is preferably 0.1 µm or greater and 500 µm or less, more preferably 1 µm or greater and 100 µm or less, yet more preferably 2 µm or greater and 50 µm or less, and particularly preferably 5 µm or greater and 20 µm or less.

Further, when the porous-film forming liquid composition of the present embodiment is used, a porous film having a high porosity and a high strength can be obtained with a wide range of a solvent amount. Particularly with a solvent amount in the range of 60 percent by mass or greater and 80 percent by mass or less, a porous film that has a dry film thickness of 2/3 or less relative to the thickness of a layer of the liquid composition in the liquid state can be obtained. For example, when an amount of the liquid composition to form a liquid film having a thickness of 20 µm is applied, and a porous film having a thickness of 13 µm or less can be obtained. Further, by adjusting the amount of the solvent, a porous film having a dry film thickness of 1/2 or less relative to the thickness of the layer of the liquid composition in the liquid state can be formed. In the same manner as described above, a porous film having a thickness of 10 µm or less can be obtained by applying the liquid composition in an amount to form a liquid film having a thickness of 20 µm without changing the coating amount itself. Specifically, a thickness of the porous film can be reduced without considering the limit derived from the coating step for achieving uniform coating. Therefore, the porous-film forming liquid composition of the present disclosure is suitable when a porous film having a thickness of 5 µm to 13 µm is formed.

### <Substrate>

The substrate on which the porous film is formed is not particularly limited, and may be appropriately selected according to the intended purpose. As the substrate, various substrates, such as various plastic films, metal foils, glass plates, ceramics, paper, fabrics, and composite substrates of the foregoing, can be used. The porous film can be formed on, as well as a smooth surface of the substrate, a substrate having a rough surface or a porous substrate.

In the case where the porous film is used as a separator, an electrode composed of an electrode mixture layer and a current collector foil, or the like, can be used as the substrate. In the case where the liquid composition is applied onto a porous substrate, such as the electrode mixture layer, it is more preferable that voids in the porous substrate are filled with a solvent in advance so that penetration of the liquid composition into the porous substrate can be inhibited, and a porous film can be formed on the porous substrate.

### Examples

The present disclosure will be concretely described through Examples and Comparative Examples hereinafter. However, the present disclosure shall not be construed as being limited by Examples below in any way. In Examples and Comparative Examples below, "part(s)" denotes "part(s) by mass", and "%" denotes "percent by mass" unless otherwise specified.

First, Experiment Examples of a liquid composition that does not include a combination of the first polyfunctional monomer and the second polyfunctional monomer of the present disclosure will be described.

### (Experiment Example 1)

### <Preparation of liquid composition>

Fifty parts by mass of trimethylolpropane triacrylate serving as a polymerizable compound, 50 parts by mass of diisobutyl ketone serving as a solvent, and 1.50 parts by mass of phenylbis(2,4,6-trimethylbenzoyl)phosphine oxide (BAPO) serving as a polymerization initiator were mixed and stirred, to obtain a liquid composition of Experiment Example 1.

### <Production of porous film>

The prepared liquid composition was applied onto a negative electrode serving as a substrate using MH5420 (manufactured by Rioch Company Limited) serving as an inkjet head. Next, the applied liquid composition was irradiated with ultraviolet rays in a nitrogen atmosphere at 150 mW/cm² for 10 seconds by a UV-LED light source with a wavelength of 365 nm serving as an active energy ray irradiation device, and the resultant film was heated and dried in an oven of 130°C, thereby obtaining a porous film. Although the dry film thickness was adjusted to 20 µm for film strength measurement, the dry film thickness of 20 µm does not indicate a preferable range.

The negative electrode used as the substrate was produced in the following manner. In water, 97.0 parts by mass of graphite particles (average particle diameter: 10 µm) serving as a negative electrode active material, 1.0 parts by mass of cellulose serving as a thickener, and 2.0 parts by mass of an acrylic resin serving as a binder were homogeneously dispersed, thereby obtaining a negative electrode active material dispersion liquid. The resultant dispersion liquid was applied onto a copper foil having a thickness of 8 µm serving as a negative electrode substrate, and the obtained coating film was dried at 120°C for 10 minutes, followed by pressing, thereby obtaining an electrode mixture layer having a void volume of 10 cc/m² and a thickness of 60 µm. The above negative electrode composed of the copper foil and the electrode mixture layer was used as the substrate.

Since the substrate was the porous substrate, the same solvent as the solvent in the liquid composition was applied at 10 cc/m² onto the substrate in advance to fill the pores of the porous substrate so that the liquid composition did not penetrate the substrate. Then, formation of the porous film was performed.

### <Measurement of wet film thickness (film thickness in liquid state)>

The density (g/cm³) of the liquid composition, and the coating weight (g/m²) of the liquid composition per unit area were measured in advance. A wet film thickness (µm) was calculated by dividing the measured density (g/cm³) of the liquid composition by the coating weight (g/m²) of the liquid composition per unit area. The wet coating amount was adjusted so that the dry film thickness (film thickness in the dried state) was to be 20 µm.

The coating weight (g/m²) per unit area can be determined by dividing a coating amount (g/s) by the transporting speed (m/s) and the coating width (m).

### <Measurement of dry film thickness (film thickness in dried state)>

The thickness including the substrate was measured by MDH-25MB (manufactured by Mitsutoyo Corporation). The dry film thickness (film thickness in the dried state) of the porous film was calculated from the difference in film thickness before and after the formation of the porous film. Although the dry film thickness (film thickness in the dried state) was adjusted to 20 µm for film strength measurement, the dry film thickness of 20 µm does not indicate a preferable range.

### <Measurement and evaluation of dry/wet film thickness ratio>

The dry/wet film thickness ratio was calculated by dividing the dry film thickness by the wet film thickness. It is preferable that a high porosity and a high strength are obtained with the dry/wet film thickness ratio of 2/3 or less. It is more preferable that a high porosity and a high strength are obtained with the dry/wet film thickness ratio of 1/2 or less.

### <Measurement and evaluation of porosity>

The porosity of the porous film was measured by cross-sectional SEM observation in the following manner. The obtained porous film was filled with unsaturated fatty acid (commercially available butter), and the resultant porous film was stained with osmium. Then, a cross-section of the porous film was obtained by focused ion beams (FIB) to expose the internal cross-sectional structure of the porous film, and the porosity in the porous film was measured by a scanning electron microscope (SEM) (Helios NanoLab G3 CX, manufactured by Thermo Fisher Scientific K.K.). The result was evaluated based on the following criteria. The evaluation result of Good (G) was judged as being acceptable.
[Evaluation criteria]
Good (G): porosity of 50% or greater
Not good (NG): porosity of less than 50%

### <Measurement and evaluation of film strength>

As the measurement of the film strength, a scratch test with a scratch needle was performed. Tribogear HHS2000S manufactured by Shinto Scientific Co., Ltd./HEIDON was used. As a scratch needle, a sapphire needle having a tip diameter of 0. 1 mm and a tip angle of 60 degrees was used. The scratch needle was moved at the speed of 1 mm/s for the moving length of 50 mm while a load was increased from 0 g to 50 g as a continuous load measurement. The load (moving length) at which the scraping started was recorded, and the recorded value was evaluated as a film strength. The film strength was evaluated based on the following criteria. The evaluation result of Good (G) was judged as being acceptable.
[Evaluation criteria]
Good (G): film strength of 30 g or greater
Not good (NG): film strength of less than 30 g

### (Experiment Examples 2 to 8)

A porous film was produced and evaluated in the same manner as in Experiment Example 1, except that in the preparation of the liquid composition of Experiment Example 1, the composition of the liquid composition was changed as presented in Table 1. In Table 1, a unit for the value of the amount of each material is parts by mass.

**Table 1**

| | | | | Experiment Example | | | | | | | |
|---|---|---|---|---|---|---|---|---|---|---|---|
| | | | | 1 | 2 | 3 | 4 | 5 | 6 | 7 | 8 |
| Amount [parts by mass] | Polymerizable compound | TMPTA | N=7 | 50 | 25 | - | - | - | - | - | - |
| | | DCP-2A | N=11 | - | - | 50 | 25 | - | - | - | - |
| | | TMP-3EO-3A | N=13 | - | - | - | - | 50 | 25 | - | - |
| | | TMP-6EO-3A | N=19 | - | - | - | - | - | - | 50 | 25 |
| | Solvent | Diisobutyl ketone | | 50 | 75 | 50 | 75 | 50 | 75 | 50 | 75 |
| | Initiator | BAPO | | 1.50 | 0.75 | 1.50 | 0.75 | 1.50 | 0.75 | 1.50 | 0.75 |
| Film thickness | Wet film thickness [*µ*m] | | | 24.4 | 34.1 | 27.4 | 57.0 | 25.6 | 55.4 | 27.2 | 76.5 |
| | Dry film thickness [*µ*m] | | | 20 | 20 | 20 | 20 | 20 | 20 | 20 | 20 |
| | Dry/Wet film thickness ratio | | | 82% | 59% | 73% | 35% | 78% | 36% | 74% | 26% |
| Evaluation | Porosity | Measured value [%] | | 53 | 70 | 54 | 60 | 51 | 51 | 48 | 33 |
| | | Evaluation | | G | G | G | G | G | G | NG | NG |
| | Film strength | Measured value [g] | | 27 | 3 | 39 | 21 | 36 | 26 | 44 | 41 |
| | | Evaluation | | NG | NG | G | NG | G | NG | G | G |

The details of the polymerizable compounds presented in Table 1 are as follows. N represents the minimum number of atoms between double bonds.
TMPTA: trimethylolpropane triacrylate (N = 7)
DCP-2A: tricyclodecane dimethanol diacrylate (N = 11)
TMP-3EO-3A: ethoxylated (3) trimethylolpropane triacrylate (N = 13)
TMP-6EO-3A: ethoxylated (6) trimethylolpropane triacrylate (N = 19)

It was found from the results of Experiment Examples 1 and 2 that, when the polyfunctional monomer having the minimum number of atoms between double bonds smaller than the minimum number of atoms between double bonds of the first polyfunctional monomer was used, the porosity was high but the film strength was low. It was found from the results of Experiment Examples 3 to 6 that, when the first polyfunctional monomer was used alone, the film strength decreased with the dry/wet film thickness ratio of 2/3 or less. It was found from Experiment Examples 7 and 8 that, when the second polyfunctional monomer was used alone, the porosity decreased.

From the above results, it was found that, when the first polyfunctional monomer or the second polyfunctional monomer was used alone as the polymerizable compound, it was difficult to achieve both the porosity and the film strength with the high solvent ratio.

### (Examples 1 to 20 and Comparative Examples 1 to 7)

Next, a liquid composition including a combination of the first polyfunctional monomer and the second polyfunctional monomer of the present disclosure was prepared according to the composition presented in Tables 2 to 4, and a porous film was produced in the same manner as in Experiment Examples. Although the measurement and evaluations were performed in the same manner as in Experiment Examples, the ratio between the monomers and the solvent was adjusted so that the dry/wet film thickness ratio was to be 50%.

**Table 2**

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| Amount [parts by mass] | Polymerizable compound | TMPTA | N=7 | - | - | - | - | - | - | - | - | - | 20 |
| | | 701A | N=7 | - | - | - | - | - | - | - | - | - | - |
| | | HDDA | N=10 | - | - | - | - | - | - | - | - | - | - |
| | | DCP-2A | N=11 | - | - | - | - | - | - | - | - | - | - |
| | | TMP-3EO-3A | N=13 | 70 | 70 | 70 | 90 | 80 | 50 | 70 | 70 | 70 | 40 |
| | | PE-5EO-4A | N=14.5 | - | - | - | - | - | - | - | - | - | - |
| | | PEG200DA | N=15 | - | - | - | - | - | - | - | - | - | - |
| | | PEG200DMA | N=15 | - | - | - | - | - | - | - | - | - | - |
| | | TMP-6EO-3A | N=19 | - | - | - | - | - | - | - | - | - | - |
| | | TMP-6PO-3A | N=19 | - | - | - | - | - | - | - | 30 | 15 | - |
| | | TMP-9EO-3A | N=25 | 30 | - | 15 | - | 10 | 40 | 25 | - | - | 30 |
| | | TMP-9EO-3MA | N=25 | - | 30 | 15 | 10 | 10 | 10 | 5 | - | 15 | 10 |
| | | PEG400DA | N=30 | - | - | - | - | - | - | - | - | - | - |
| | | TMP-20EO-3A | N=47 | - | - | - | - | - | - | - | - | - | - |
| | Solvent | Diisobutyl ketone | | 200 | 230 | 200 | 215 | 200 | 195 | 200 | 200 | 200 | 230 |
| | | Cyclohexanone | | - | - | - | - | - | - | - | - | - | - |
| | | 2-Ethylhexanol | | - | - | - | - | - | - | - | - | - | - |
| | | Ethylhexanoate | | - | - | - | - | - | - | - | - | - | - |
| | | Hexylpropionate | | - | - | - | - | - | - | - | - | - | - |
| | Initiator | BAPO | | 3 | 3 | 3 | 3 | 3 | 3 | 3 | 3 | 3 | 3 |
| Evaluation | Porosity | Measured value [%] | | 54 | 58 | 55 | 53 | 53 | 51 | 56 | 55 | 58 | 58 |
| | | Evaluation | | G | G | G | G | G | G | G | G | G | G |
| | Film strength | Measured value [g] | | 36 | 31 | 41 | 31 | 38 | 35 | 39 | 34 | 39 | 31 |
| | | Evaluation | | G | G | G | G | G | G | G | G | G | G |

**Table 3**

| | | | | Example | | | | | | | | | |
|---|---|---|---|---|---|---|---|---|---|---|---|---|---|
| | | | | 11 | 12 | 13 | 14 | 15 | 16 | 17 | 18 | 19 | 20 |
| Amount [parts by mass] | Polymerizable compound | TMPTA | N=7 | - | - | - | - | - | - | - | - | - | - |
| | | 701A | N=7 | - | - | - | - | - | - | - | - | - | - |
| | | HDDA | N=10 | - | - | - | 60 | - | - | - | - | - | - |
| | | DCP-2A | N=11 | - | - | - | - | - | 70 | - | - | - | - |
| | | TMP-3EO-3A | N=13 | 70 | 70 | 70 | - | - | - | 70 | 70 | 70 | 70 |
| | | PE-5EO-4A | N=14.5 | - | - | - | - | 70 | - | - | - | - | - |
| | | PEG200DA | N=15 | - | 30 | - | - | - | 30 | - | - | - | - |
| | | PEG200DMA | N=15 | - | - | 15 | - | - | - | - | - | - | - |
| | | TMP-6EO-3A | N=19 | 30 | - | 15 | - | - | - | - | - | - | - |
| | | TMP-6PO-3A | N=19 | - | - | - | - | - | - | - | - | - | - |
| | | TMP-9EO-3A | N=25 | - | - | - | 25 | - | - | 15 | 15 | 15 | 15 |
| | | TMP-9EO-3MA | N=25 | - | - | - | 15 | 30 | - | 15 | 15 | 15 | 15 |
| | | PEG400DA | N=30 | - | - | - | - | - | - | - | - | - | - |
| | | TMP-20EO-3A | N=47 | - | - | - | - | - | - | - | - | - | - |
| | Solvent | Diisobutyl ketone | | 200 | 200 | 200 | 300 | 213 | 270 | - | - | - | - |
| | | Cyclohexanone | | - | - | - | - | - | - | 200 | - | - | - |
| | | 2-ethylhexanol | | - | - | - | - | - | - | - | 200 | - | - |
| | | Ethylhexanoate | | - | - | - | - | - | - | - | - | 200 | - |
| | | Hexylpropionate | | - | - | - | - | - | - | - | - | - | 200 |
| | Initiator | BAPO | | 3 | 3 | 3 | 3 | 3 | 3 | 3 | 3 | 3 | 3 |
| Evaluation | Porosity | Measured value[%] | | 54 | 52 | 52 | 58 | 51 | 60 | 53 | 55 | 50 | 51 |
| | | Evaluation | | G | G | G | G | G | G | G | G | G | G |
| | Film strength | Measured value [g] | | 33 | 30 | 34 | 32 | 30 | 30 | 34 | 39 | 34 | 32 |
| | | Evaluation | | G | G | G | G | G | G | G | G | G | G |

**Table 4**

| | | | | Comparative Example | | | | | | |
|---|---|---|---|---|---|---|---|---|---|---|
| | | | | 1 | 2 | 3 | 4 | 5 | 6 | 7 |
| Amount [parts by mass] | Polymerizable compound | TMPTA | N=7 | - | - | 70 | - | - | - | - |
| | | 701A | N=7 | - | - | - | 70 | - | - | - |
| | | HDDA | N=10 | - | - | - | - | - | - | - |
| | | DCP-2A | N=11 | 100 | - | - | - | - | - | - |
| | | TMP-3EO-3A | N=13 | - | 100 | - | - | 70 | 70 | - |
| | | PE-5EO-4A | N=14.5 | - | - | - | - | - | - | - |
| | | PEG200DA | N=15 | - | - | - | - | - | - | 100 |
| | | PEG200DMA | N=15 | - | - | - | - | - | - | - |
| | | TMP-6EO-3A | N=19 | - | - | - | - | - | - | - |
| | | TMP-6PO-3A | N=19 | - | - | - | - | - | - | - |
| | | TMP-9EO-3A | N=25 | - | - | - | - | - | - | - |
| | | TMP-9EO-3MA | N=25 | - | - | 30 | 30 | - | - | - |
| | | PEG400DA | N=30 | - | - | - | - | - | 30 | - |
| | | TMP-20EO-3A | N=47 | - | - | - | - | 30 | - | - |
| | Solvent | Diisobutyl ketone | | 300 | 220 | 300 | 270 | 185 | 180 | 135 |
| | | Cyclohexanone | | - | - | - | - | - | - | - |
| | | 2-Ethylhexanol | | - | - | - | - | - | - | - |
| | | Ethylhexanoate | | - | - | - | - | - | - | - |
| | | Hexylpropionate | | - | - | - | - | - | - | - |
| | Initiator | BAPO | | 3 | 3 | 3 | 3 | 3 | 3 | 3 |
| Evaluation | Porosity | Measured value[%] | | 64 | 55 | 63 | 60 | 47 | 47 | 33 |
| | | Evaluation | | G | G | G | G | NG | NG | NG |
| | Film strength | Measured value [g] | | 21 | 23 | 4 | 10 | 34 | 27 | 23 |
| | | Evaluation | | NG | NG | NG | NG | G | NG | NG |

The details of the polymerizable compounds presented in Table 2 to 4 are as follows. N represents the minimum nuber of atoms between double bonds.
TMPTA: trimethylolpropane triacrylate ( N = 7)
701A: 2-hydroxy-3-methacrylpropylacrylate (N = 7)
HDDA: 1,6-hexanediol diacrylate (N = 10)
DCP-2A: tricyclodecane dimethanol diacrylate (N = 11)
TMP-3EO-3A: ethoxylated (3) trimethylolpropane triacrylate (N = 13)
PE-5EO-4A ethoxylated (5) pentaerythritol tetraacrylate (N = 14.5)
PEG200DA: polyethylene glycol (200) diacrylate (N = 15)
PEG200DMA: polyethylene glycol (200) dimethacrylate (N = 15)
TMP-6EO-3A: ethoxylated (6) trimethylolpropane triacrylate (N = 19)
TMP-6PO-3A: propoxylated (6) trimethylolpropane triacrylate (N = 19)
TMP-9EO-3A: ethoxylated (9) trimethylolpropane triacrylate (N = 25)
TMP-9EO-3MA: ethoxylated (9) trimethylolpropane trimethacrylate (N = 25)
PEG400DA: polyethylene glycol (400) diacrylate (N = 30)
TMP-20EO-3A: ethoxylated (20) trimethylolpropane triacrylate (N = 47)

As demonstrated in Examples 1 to 20, a porous film having a high porosity and a high strength could be formed by using the porous-film forming liquid composition of the present disclosure, even when the liquid composition was a liquid composition with which the thickness of the porous film was reduced relative to the thickness of the layer of the liquid composition.

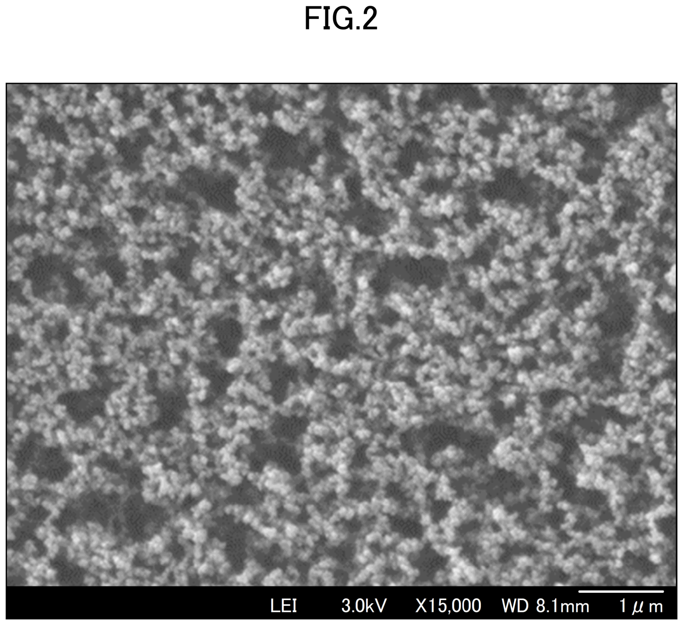

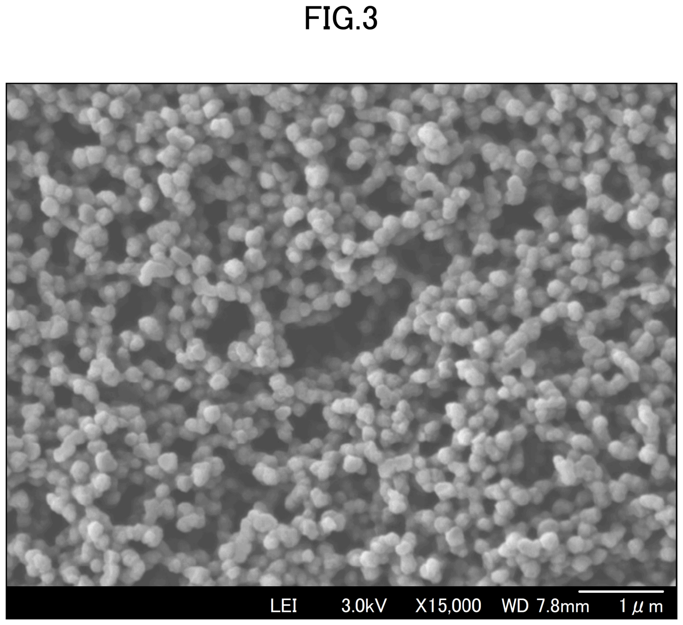

Further, the effect obtained by the addition of methacrylate was compared using SEM observation images. Fig. 2 is a SEM observation image of the porous film obtained from the porous-film liquid composition that does not include methacrylate (Example 1). Fig. 3 is a SEM observation image of the porous film obtained from the porous-film forming liquid composition that includes methacrylate (Example 3). It was found from the comparison between Fig. 2 and Fig. 3 that the diameters of the pores in the framework were increased by adding the methacrylate.

On the other hand, it was found from the results of Comparative Examples 1 and 2 that, when the second polyfunctional monomer was not included, the strength decreased. It was found from the results of Comparative Examples 3 and 4 that, when the polyfunctional monomer, in which the minimum number of atoms between double bonds was smaller than the minimum number of atoms between double bonds in the first polyfunctional monomer, was used instead of the first polyfunctional monomer, the porosity was high, but the strength decreased. It was found from the results of Comparative Examples 5 and 6 that, when the polyfunctional monomer, in which the minimum number of atoms between double bonds was larger than the minimum number of atoms between double bonds in the second polyfunctional monomer, was used instead of the second polyfunctional monomer, the porosity decreased. It was found from the result of Comparative Example 7 that, when the first polyfunctional monomer was not included, the porosity and strength decreased.

Although the embodiments of the present disclosure have been described above, the present disclosure is not limited to the specific embodiments, and various modifications and changes can be made within the scope of the invention described in the claims.

For example, embodiments of the present disclosure include the following.
<1> A porous-film forming liquid composition including:
   polymerizable compounds; and
   a solvent,

   wherein the porous-film forming liquid composition is curable with active energy rays,
   the polymerizable compounds include a first polyfunctional monomer, in which a minimum number of atoms between a double bond in one functional group and a double bond in another functional group is 10 or greater and less than 15, and a second polyfunctional monomer, in which a minimum number of atoms between a double bond in one functional group and a double bond in another functional group is 15 or greater and 25 or less, and
   an amount of the second polyfunctional monomer relative to a total amount of the polymerizable compounds is 10 percent by mass or greater.
<2> The porous-film forming liquid composition according to <1>,
   wherein the second polyfunctional monomer includes methacrylate.
<3> The porous-film forming liquid composition according to <2>,
   wherein an amount of the methacrylate relative to the total amount of the polymerizable compounds is 5 percent by mass or greater and 20 percent by mass or less.
<4> The porous-film forming liquid composition according to any one of <1> to <3>,
   wherein an amount of the solvent relative to a total amount of the porous-film forming liquid composition is 60 percent by mass or greater and 80 percent by mass or less.
<5> A method for forming a porous film, the method comprising:
   applying the porous-film forming liquid composition of any one of <1> to <4> onto a substrate to form a layer of the porous-film forming liquid composition;
   irradiating the layer of the porous-film forming liquid composition with active energy rays to produce a polymerized product of the polymerizable compounds; and
   drying the polymerized product to form a porous film,
   wherein a thickness of the porous film is 2/3 or less of a thickness of the layer of the porous-film forming liquid composition.
<6> The method according to <5>,
   wherein the porous film has a porosity of 50% or greater.

The porous-film forming liquid composition according to any one of <1> to <4> and the method for forming the porous film according to <5> or <6> can solve the above-described various problems existing in the related art, and can achieve the object of the present disclosure.

## Claims

1. A porous-film forming liquid composition, comprising:
polymerizable compounds; and
a solvent,
wherein the porous-film forming liquid composition is curable with active energy rays,
the polymerizable compounds include a first polyfunctional monomer, in which a minimum number of atoms between a double bond in one functional group and a double bond in another functional group is 10 or greater and less than 15, and a second polyfunctional monomer, in which a minimum number of atoms between a double bond in one functional group and a double bond in another functional group is 15 or greater and 25 or less, and
an amount of the second polyfunctional monomer relative to a total amount of the polymerizable compounds is 10 percent by mass or greater.

2. The porous-film forming liquid composition according to claim 1,
wherein the second polyfunctional monomer includes methacrylate.

3. The porous-film forming liquid composition according to claim 2,
wherein an amount of the methacrylate relative to the total amount of the polymerizable compounds is 5 percent by mass or greater and 20 percent by mass or less.

4. The porous-film forming liquid composition according to any one of claims 1 to 3,
wherein an amount of the solvent relative to a total amount of the porous-film forming liquid composition is 60 percent by mass or greater and 80 percent by mass or less.

5. A method for forming a porous film, the method comprising:
applying the porous-film forming liquid composition of any one of claims 1 to 4 onto a substrate to form a layer of the porous-film forming liquid composition;
irradiating the layer of the porous-film forming liquid composition with active energy rays to produce a polymerized product of the polymerizable compounds; and
drying the polymerized product to form a porous film,
wherein a thickness of the porous film is 2/3 or less of a thickness of the layer of the porous-film forming liquid composition.

6. The method according to claim 5,
wherein the porous film has a porosity of 50% or greater.
